(19) **Europäisches Patentamt**
**European Patent Office**
**Office européen des brevets**

(11) **EP 2 667 541 B1**

(12) **EUROPEAN PATENT SPECIFICATION**

(45) Date of publication and mention
of the grant of the patent:
**05.08.2015 Bulletin 2015/32**

(51) Int Cl.:
***H04L 12/24*** *(2006.01)*

(21) Application number: **12305571.7**

(22) Date of filing: **23.05.2012**

(54) **Connectivity service orchestrator**

Konnektivitätsdienst-Orchestrator

Orchestration de services de connectivité

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**27.11.2013 Bulletin 2013/48**

(73) Proprietor: **ALCATEL LUCENT**
**92100 Boulogne-Billancourt (FR)**

(72) Inventors:
• **Verchere, Dominique**
**91650 Breuillet (FR)**

• **Damm, Gerard**
**Frisco, TX Texas 75035 (US)**

(74) Representative: **Sciaux, Edmond**
**Alcatel-Lucent International**
**148/152 route de la Reine**
**92100 Boulogne-Billancourt (FR)**

(56) References cited:
**US-A1- 2004 172 412      US-A1- 2007 118 643**
**US-A1- 2009 092 047      US-A1- 2010 290 366**
**US-A1- 2011 171 938**

**Description**

Technical Field

The present invention relates to an apparatus and method for implementing connectivity services on a network.

Background

Connectivity services, such as a VPN (virtual private network) tunnel configuration or a VM (virtual machine) configuration, are manually implemented in a network by an operator. A VPN tunnel guarantees to its owner a predetermined bandwidth or quality of service over a predetermined network path. VPN tunnels are mainly used by companies who want to have a constant and reliable connection between for example a remote company datacenter and the company headquarters. If no VPN tunnel is configured, such company would depend on best effort internet for the connection between headquarters and remote datacenter, and thereby depend on the availability of bandwidth on the public network with its ups and downs. By configuring a VPN tunnel on a (public) network, a predetermined bandwidth is reserved for the company, as if a virtual tunnel is created that can only be used by that company. Thereby the companies connection becomes independent from the traffic on the network. Another example of application for VPN tunnels includes digital television, where bandwidth is reserved to transfer a video stream. A VM can be configured to provide a predetermined service such as data storage, computing, providing software or other service. Such VM's are configured in a network often as part of a server system to remotely perform tasks and deliver services to a user.

US2011/0171938 describes a method for syndication of multiple service instances, wherein US2011/0171938 focusses on the cloud services rather than the connections between the end-user devices and the cloud. US2007/00118643 describes a mechanism for network planning wherein service orders can be received and implemented in the network.

A drawback of the existing connectivity services is that it prevents optimal usage of the network. For example considering a VPN tunnel, after configuration, it is available to a user, the bandwidth is reserved for the user. Another user requiring a similar service must also request a VPN tunnel, and two tunnels are installed. In a real-life network, particularly when using VM services (each VM typically having a different network address), millions of such VPN tunnels should be created to respond to each request. This could in theory again result in collision between VPN tunnels, namely a predetermined bandwidth is guaranteed for each tunnel. Therefore in configuring the network by the network operator, worst case scenarios are used (all VPN tunnels are maximally used) to dimension the routers and connection lines. In practice however, rarely all VPN tunnels are used in the same time. The above-described approach thereby results in an over-dimensioned network, whereby the network is consequently not optimally used. This results in a VPN network connection being substantially more expensive than best effort internet for an owner.

It is an object of the present invention to provide an apparatus and method for configuring connectivity services so that a network can be more optimally used. information representing multiple connectivity services configured on a network managed by the network management system, the network service orchestrator further comprising input means for receiving a service order, processing means configured to process an orchestrator algorithm to select a set of connectivity services out of said multiple connectivity services based on said service order, and a signal generator for generating and transmitting a signal to assign/deassign the selected set of connectivity services in the network to the service order. By pre-configuring connectivity services on the network, the invention can be applied in existing networks, where connectivity services might already been configured. Storing information representing configured connectivity services in a database has as a result that the network service orchestrator has full overview regarding the connectivity services that are assigned/deassigned in a network. This allows to process an incoming service order in a minimum of time. The network service orchestrator provides in a dynamic way of implementing connectivity services by providing the possibility and means for assigning and deassigning connectivity services to a service order. Thereby, a VPN tunnel not used by a (first user) service can be deassigned from that service and can be assigned to another (second user) service. Thereby VPN tunnels, VM configurations and other services can be more optimally used by flexibly assigning the services to a service order instead of statically creating (and demolishing) a new connectivity service for each service order.

Preferably, the signal comprises instructions to the network management system to assign/deassign connectivity services to the service order. The signals are transmitted through the network via the network management system to instruct the network nodes in the network and/or the service order requestor to assign/deassign connectivity services. Such application of the invention is easy to be implemented in an existing network. Preferably, the instructions to assign/deassign comprise at least a Quality of Service parameter.

Preferably, the service order comprises at least an activation time interval and a service duration, and wherein the orchestrator algorithm is adapted for time-based scheduled selection of the set of connectivity services. The activation time interval and service duration provides the network service orchestrator with a powerful tool to maintain performance of the network and avoid collision in the sense of a VPN tunnels being used by multiple services. Namely the activation time interval gives the network service orchestrator the possibility to shift the effective starting point, which allows to organize different service orders over time.

An embodiment of the invention further relates to a method for orchestrating connectivity services in a network, comprising the steps of:

- Receiving at least one service order;

- Selecting a set of connectivity services out of a database comprising information representing connectivity services configured on a network based on the at least one service order;

- Generating a signal to assign/deassign the selected set of connectivity services on the network; and

- Transmit the generated signal to a network management system managing the network.

The method according to the invention allows to efficiently and optimally use a network because not-used connectivity services can be deassigned from the non-used service and connected to another service. Upon request (service order), a connectivity service can be assigned to a service to provide to its owner the requested service. Preferably, the connectivity services comprise at least one of VPN tunnel configurations and VM configurations.

Preferably, the service order comprises an activation time interval and a service duration, and whereby the step of selecting comprises time-based scheduled selection of said set. Time-based scheduling can be applied by the skilled person implementing this invention to avoid network overload. As an example, one connectivity service requiring VPN tunnel X can be delayed to avoid collision with another service which is currently using the VPN tunnel X. The activation time interval and service duration, comprised in the service order, allow the network orchestrator to schedule requested services over time.

Preferably the method comprises the further step of updating the database based on the generated signal. Such updating keeps the database up-to-date. As a result, the network orchestrator can by scanning or searching the database retrieve all information regarding connectivity services to make an accurate selection. Furthermore, because the information is stored in a database at the network service orchestrator, the selection can be made in a relatively short period of time.

Brief description of the figures

Some embodiments of apparatus and/or methods in accordance with embodiments of the present invention are now described, by way of example only, and with reference to the accompanying drawings, in which:

figure 1 illustrates a network configuration as it is known in the prior art;
figure 2 illustrates a network configuration comprising an embodiment of the invention;
figure 3 shows a service order states diagram; and
figure 4 shows a network service orchestrator architecture according to an embodiment of the invention.

Detailed description of embodiments

According to the prior art, best effort internet is the predominant method to connect enterprises to datacenters. These datacenters deliver Infrastructure as a Service (IaaS) such as computing as a service, storage as a service or software applications (e.g. Enterprise Resource Planning, Customer Relationship Management, disaster recovery, multi-user gaming, distance education, telemedicine, video conferencing services for global companies). A datacenter hosts servers that are virtualized to provide VM (Virtual Machine) access to enterprises customers. But enterprises are hesitant to move their owned business-critical applications to VMs when these VMs are accessible via best-effort internet. The reasons for these preoccupations are network performance guarantees (e.g. bandwidth, availability, delays), security vulnerabilities, data streaming path control compliance with the government regulations, or other.

Cloud computing is a way of accessing computing resources (including storage) as a service, i.e. via VM, rather than accessing computing resources from local servers, whereby shared resources, software, and information are provided to the users as a utility (like the electricity grid) over a network, typically the Internet for Public Cloud or a dedicated VPN (Virtual Private Network) configured on the enterprise Network with dedicated VMs configured on the enterprise datacenters for Private Cloud.

A VPN service as defined by Telecom service providers typically contains a full suite of functions to support enterprise users including: (i) control and management (service provisioning, modification, monitoring), (ii) quality and performance parameter of service (QoS: Quality of Service), (iii) operation, administration, and maintenance (OAM), (iv) troubleshooting (v) billing and statistics (accounting), (vi) security, (vii) filtering and (deep) packet inspection (DPI).

The existing Telecom network based Cloud service management technologies do not address the concerns (listed previously) of enterprises that want to access cloud services issued from external datacenters. In fact, on one hand, public cloud applications are accessed and launched by enterprises independently of the underlying network configurations in place on the Telecom network infrastructure; and on the other hand, private cloud applications are associated to configurations of an enterprise network which is static, i.e. the network configuration (for Internet services or VPN services) is in place whether or not the cloud application (VM) is accessed/used by the users of the enterprise. This especially creates problems when using cloud computing services in combination with dedicated VPN tunnels, namely a VPN tunnel should be configured for each VM service in the cloud computing workflow (different tasks are typically performed by different VMs). Thereby, the network is not efficiently used because while these VPN tunnels are statically implemented, they are often only successively used thereby reserving a lot of bandwidth on the network and only using a small part of it.

In the private case in which network and datacenter infrastructures are managed by the enterprise, concerns related to security and confidentiality are less critical because the infrastructure is usually owned and operated by the enterprise. However the problems of configuring the adequate connectivity services remain because each VPN service is not dimensioned specifically for a session of the cloud applications. Therefore even in privately owned networks, using cloud applications in combination with VPN tunnels, network efficiency cannot be optimized.

Moreover, VPN services deployed over MPLS-controlled networks for enterprises are very expensive compared to best-effort connectivity services. Typically, the cost of delivering VPN services to enterprise users is 20 to 100 times the cost of providing best-effort internet.

Currently implemented network configurations are typically planned for the worst case scenario of connectivity service provisioning, which leads to over-provisioning and low resource utilization. Once a network configuration plan is defined and implemented over the network infrastructure, this plan remains unchanged as long as possible and typically for several months.

Connectivity service provisioning processes can be automated. The problem is that these processes are intrinsically associated to the configurations of the network elements to support them. Moreover, those connectivity services are not automatically related to the QoS parameters of the specific connectivity required by distributed applications. The provisioning of these connectivity services is done by configuring the ports and controlling the connections on each device involved. The connectivity services implemented are not correlated with the dynamic connectivity needs of the distributed and virtualized application.

There may be network management system software that supports a Telecom operator to deploy connectivity services by automatically configuring the ports/interfaces, and connections in the nodes involved. However a connectivity service provisioned over the network is statically configured and is currently not aware or related of the use of an identified cloud application.

Some network services can be provisioned and then configured for a small number of specific cloud applications. However, a Telecom network service provider can provide connectivity services for hundreds or thousands of cloud applications. Today, the solution for operators is to dimension the QoS of each connectivity service part of an IaaS for the worst case of the list of the cloud applications deployed. The consequence is that the capacity of the network infrastructure is never efficiently used, which is opposite to Operators' goals. Moreover, the related pricing for these private connectivity services is very high as previously mentioned, so Customers are deterred from using such services. The benefits of lower costs and higher utilization in datacenters obtained through application/storage virtualization and "cloudification" are yet to be transposed at the network and service connectivity level.

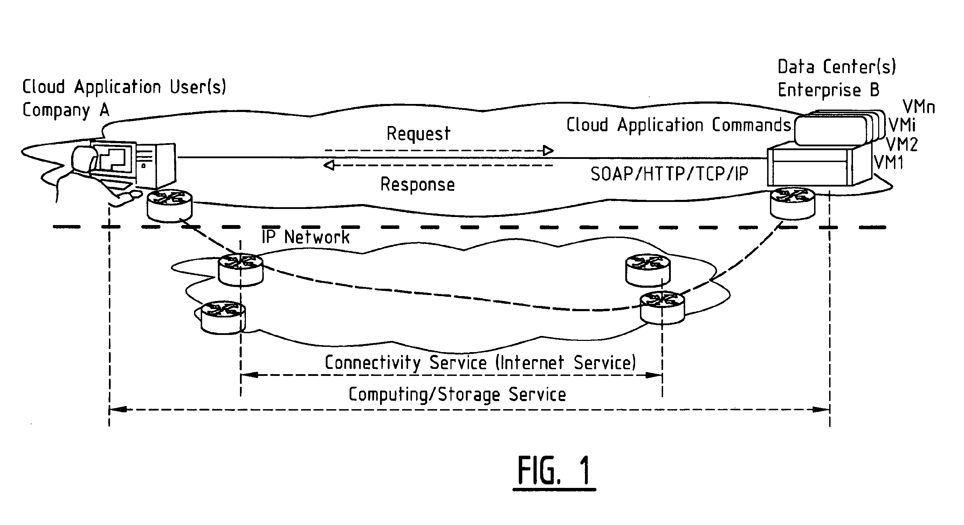

Figure 1 illustrates an existing network whereby the upper part of the figure illustrates the VPN tunnels configured on the network and the lower part of the figure illustrates the remaining available network resources (all network resources minus the resources dedicated to the VPN tunnels). Because of the static nature of the VPN tunnels, there is not interaction between user and network. Consequently the network cannot adapt to the needs of the user.

Cloud services such as IaaS are composed of one or several services that are connectivity services delivered by Telecom network service providers, as well as computing, storage and/or software applications (collectively referred to as VM: Virtual Machine) delivered by datacenter service providers. For carrier-grade services, each IaaS component requires to be allocated over reserved resources (VPN tunnels) of an infrastructure to be executed. The reserved resources of a transported network are controlled by MPLS (IP, ATM, Frame Relay) or GMPLS (TDM, Wavelength, Fiber/Port).

Each IaaS component is allocated over a reserved resource during a defined time interval, which has a start time and an end time.

To allow composing VPN services and VM services for delivering a IaaS service, the invention provides in a centralized network service orchestrator function that coordinates the real-time activation of a predefined set of VPN services (which are configured on the network) based on the Service Orders issued from connectivity service requesters (for example the cloud application workflows). Each pre-defined VPN tunnel is configured on the Telecom network infrastructure, meaning the network resources (routers, ports and interfaces) are identified, their capability checked and explicitly reserved (allocated to the requested service) during the defined time interval. Also, no network resources are allocated for a VPN service if it is not activated during a defined time interval. VPN and VM services are not configured on the fly, but allocated on the fly, to Service Orders. VPN and VM services may be allocated and deallocated by the orchestrator, and it will be clear that this operation requires a significantly shorter period of time than dynamic configuration of similar services. Therefore, the proposed approach provides elasticity by resorting to time-based scheduled allocation of a predefined pool of VPN and VM resources, which may be active or inactive, but are not defined and configured dynamically. On a different timescale (greater than a day, probably weekly or monthly), the pool itself can evolve to adapt to longer-term or recurring trends. In this regard, automatic configuring/releasing from connectivity services is compatible with the invention when managing the pool of connectivity services. Pool resources which haven't been used for a long time can be removed from the pool, while if there is a surge or a trend increase in Service Orders, the orchestrator could decide to extend the pool by configuring new connection services in the network.

Thereby, this way of implementing connectivity services takes into account the cloud applications and its specific connectivity needs over time and its real dynamic usage of the connectivity services. The reason is because the workflow (or other connectivity service requester) is provided with the possibility of expressing its needs of connectivity services over the transport network for running the cloud applications.

The orchestration function manages the activation of each VPN service in correlation with the execution of one or several VMs participating in the workflow of a Cloud Application. Preferably, the invoked VPN services neither know nor need to know that they are involved with the correlated VMs in a Cloud application workflow. These VPN services activated and provisioned over Telecom networks and VM services activated and provisioned over Datacenters are integrated in the execution of a Cloud application workflow.

Preferably, to avoid contradictory instructions, only the centralized orchestrator function is aware of the activation time interval of each VPN service, and of the explicit definitions of operations and the invocation sequences of the different VMs related to the allocated VPN services.

The network service orchestrator function composes VPN services with VM services to get a specific Cloud service in which a Cloud application can be executed. Each VPN service element is described in a language to allow its composition with one or several VM service elements.

In order to deliver carrier-grade connectivity services, the network service orchestrator preferably manages VPN services as well.

The network service orchestrator processes a sequence of Service Orders (each of which specifies certain connectivity requirements) that arrive over time. The network service orchestrator first selects a sub-set of connectivity services from its connectivity services database comprising information representing the connectivity services implemented in the network (also referred to as service inventory database). In order to coordinate the activations and allocations of a VPN service with the Service Order of cloud applications, an orchestration algorithm utilizes the inventoried connectivity services available efficiently, while being able to operate fast enough to keep up with the Service Order incoming rate issued from the executions of the different cloud applications and maximizing the utilization rate of each inventoried connectivity services in the connectivity service inventory data-base. A Service Order is processed in order to minimize, on average, the time that a connectivity service is associated to a Service Order from start time to the service completion. It will be clear to a skilled person taking knowledge of this working principle, that the described objective can be implemented in various ways, as will be explained further below.

It's all about relative time frames: if a "service order" (duration of the execution of a virtualized application) will last X seconds, and configuring/releasing VMs and VPNs takes Y seconds, and allocating VMs and VPNs takes Z seconds, we have the following:

Z is much smaller than Y: Z«Y

X can be anything. If X»Y, then existing on-the-fly configurations/releases would work. But it can definitely happen that X is similar to, or even less than Y. In that case, a Z-based solution (like this one) is better than a Y-based solution. So in general, with wildly variable X values, including many short X<Y values, it's easier to achieve a reasonably good utilization while keeping latency low (and meeting the SLAs) with schedulers such as those proposed as examples.

A Service Order is created from a cloud application; it is a structure that contains several parameters. Each parameter can be explicitly given a value by the cloud application. When some Parameters are not given a value, the connectivity service orchestrator can infer them, using rules defined by Cloud Service Provider.

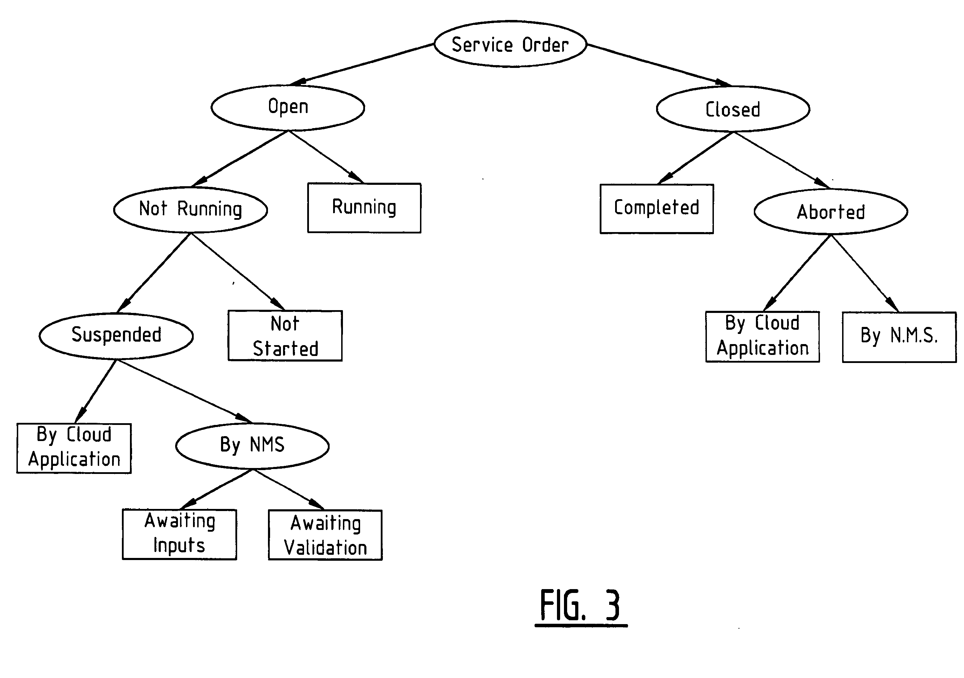

An overview of the possible states of a Service Order is provided in figure 3, which will be described in further detail hereunder.

A Connectivity Service Order state is either Open or Closed. In case of Closed state, it can be either Completed or Aborted. In case the Service Order is Aborted, it can be Aborted by the media Cloud Application, or Aborted by the Network Management System (NMS).

If the Service Order is in the Open state, the Service Order can be either Running or Not_Running. In case it is not running, the Service Order can be either Suspended or Not_started, and in the former case it can be suspended by the Network Orchestrator or suspended by Media Cloud Application.

When the connectivity Service Order is Closed-Completed, the related connectivity services associated with this Service Order should be in one of the allowable states with respect to the particular service request associated with the order.

For example, if the Service Order is associated with an activation command, then all the connectivity services associated with the Service Order should be in the Active state. If the Service Order (Closed-Completed) is associated with a modify request, then the connectivity services must be in the same state as before the request was made.

When the connectivity Service Order is Closed-Aborted-By_Cloud_Application, at the time the Service Order is aborted, the associated connectivity services may be in any state. Typically, the connectivity service will be eventually terminated and then released by the network orchestrator.

When the connectivity Service Order is Closed-Aborted-By NMS, at the time the Service Order is aborted, the associated connectivity services may be in any state. Typically, the connectivity services will eventually be released by the network orchestrator to become available in service inventory database (CS-DB).

When the connectivity Service Order is Open-Not_Running-Suspended-Awaiting_Input, the connectivity services can be in any state with the possible exception of Terminated. The network service orchestrator is waiting for additional information from the Cloud Application to complete the Service Order.

When the connectivity Service Order is Open-Not_Running-Suspended-Awaiting_Validation, all of the connectivity services associated with this Service Order should be in one of the allowed states, i.e. Reserved, Provisioned or Activated.

When the connectivity Service Order is Open-Not_Running-Not_Started, the connectivity service can be any state (Reserved, Provisioned or Activated) with the exception of Terminated state.

When the connectivity Service Order is Open_Running, the connectivity services can be in any state (Reserved, Provisioned or Activated) with the exception of Terminated.

If the sub-set of connectivity services selected from a Service Order is not empty, then the orchestration algorithm instantiates one connectivity service during the time interval expressed in the Service Order (this time interval is defined from the workflow execution time of the cloud application).

According to the cloud applications and the rules used by network operators, different classes of orchestration algorithms are preferably implemented depending on whether a vacant time created between two successive connectivity Service Orders allocated on the same connectivity service can possibly be used i.e. allocated for a new Service Order. Preferably the orchestration algorithm is one of following:

- First Fit Connectivity Service algorithms (FFCS): a connectivity service is activated on the transport network for a cloud application by scanning each available connectivity service of the service inventory database organized in a list. The scanning can be initiated from the top of the list of the connectivity service indexes, in a Round Robin manner, in a random manner or according to specific rules defined by the network service provider.

- Latest Unused Connectivity Service algorithms (LUCS): from a Service Order received, the orchestrator selects an available connectivity service after looking at each connectivity service registered in the service inventory database. The algorithm selects the available connectivity service with the dawn (The dawn of a connectivity service - by analogy to its meaning which is: beginning - is the first instant of full availability in the connectivity service; this instant, denoted D, corresponds to the earliest time after which there is no previously planned allocation of any Service Orders issues by cloud applications) nearest (and preceding) the required time interval for the Service Order. Consequently it results in the smallest vacant-time, reducing the waste of connectivity service allocations (and maximizing the usage of each connectivity service), since a VPN (connectivity service) might get re-used by a Service Order before it is deactivated (as scheduled in the future by the orchestrator). The time scales are different for Service Orders, which may arrive frequently and be allocated frequently to activate VPNs, and for the activation/deactivation of these predefined VPNs, which should be done less frequently to minimize overhead. Still, this adaptive method adjusts itself to the needs to cloud applications, and provides an elastic network resource allocation.

- Latest Unused Connectivity Service algorithms with vacant-time filling (LUCS-VF): can allocate a new Service Order on vacant time intervals generated by previously bound Service Orders with a connectivity service. It results in the smallest vacant-times between the end of the previously allocated Service Order and the start of the new Service Order. The algorithm is more complex than the previous one as it has to take into account of all the vacant time intervals. The state of each connectivity service stored in the service inventory data-base can no longer be represented by just the connectivity service dawn values.

- Sequencing Connectivity Service Order algorithms (SCSO): each Service Order is allocated to available connectivity services after a delay. This delay is defined as the duration necessary to configure and activate a connectivity service on the transport network, then this delay (denoted Δ) is defined according to network operational practices (in practicable Telecom network infrastructure, the duration Δ can be fixed to 12 units, e.g. 1 unit can be 1 hour). Rather than binding each connectivity service as soon as the corresponding Service Order arrives, the activation of the connectivity service is delayed until Δ units of time before the start time of connectivity service must be activated. Each Service Order is processed on the order of the starting time of its connectivity service but not (as previously) on the arrival date of the Service Order.

These are possible algorithms, but the skilled person will understand that others could work with the proposed approach as well. They reflect some Network Operator objectives and needs. An even more generic algorithm could be defined, which would take into account rules from the Network Operator and their Customers, and would perform the allocation orchestration depending on these rules. If such rules are defined in the form of mathematical constraints and formalism such as ILP (Integer Linear Programming), any set of rules can be combined as an input to the generic constraint-based algorithm. The orchestrator could run different rule sets for each Service Order instance: per Customer, per Cloud Application, etc.

From a Service Order issued by a cloud application, each of these orchestration algorithms selects a connectivity service by optimizing the transmission response time and the network resource costs. Then, the orchestrator interacts with Network Management System (NMS) to activate and to deactivate or allocate and deallocate each connectivity service or allocate and deallocate each connectivity service to the ordered service.

Consequently, this embodiment of the invention provides a way for dynamically orchestrating the configuration changes of the connectivity services for private companies over transport network infrastructure in accordance with the access of the cloud applications. A cloud application session requires the enterprise user to be connected to one or several datacenters following a defined workflow. This workflow is used to define the infrastructure as services (IaaS), and therefore, orchestration is automated by allocation of VPN services and tying them to the allocation or activation of VM services together at the time when the cloud application is executed, i.e. used by the enterprise.

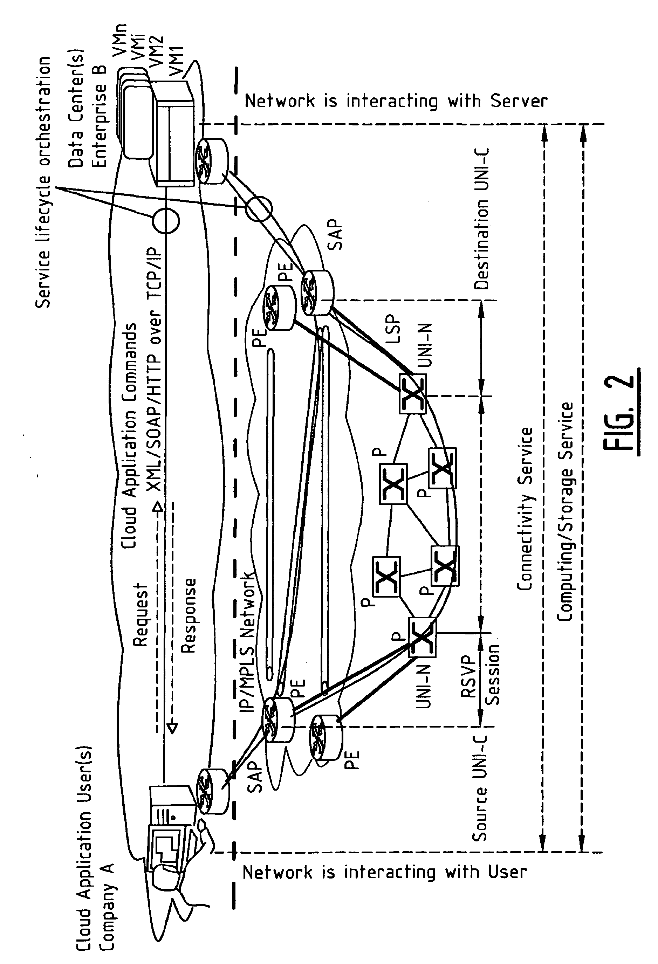

Figure 2 shows a situation similar to figure 1, but implementing an embodiment of the invention. Thereby, interaction between user and the network is made possible so that the network can adapt to the specific needs of the user at a moment of time (moment of request or a later moment upon choice of the user via the parameter 'start time'; see below). VPN tunnel configurations and VM configurations (shown at the upper part of the figure) are still present in the network, but can be allocated and deallocated by the network service orchestrator. If the user does not use a VPN service, it can be deallocated so that the network (lower part of the figure) can allocate the VPN tunnel to another service, possibly requested by another user. This allows optimal use of the network which lowers costs for the user. Such configuration allows to allocate VPN tunnels and VM configurations over time to successive service orders to connect a different user via a dedicated predefined pool of VPN tunnels to different VMs.

The cost of the network resources is preferably charged to the cloud application according to the utilized resources of the connectivity service by the time. Those utilized network resources include the list of routers involved and their transmission interface capabilities (e.g. 1 Gbit/s, 10 Gbit/s, 100 Gbit/s, etc.). The cost model can be defined according to a charging strategy defined by the Telecom network operator. A cost model should be beneficial for both the Operator and the Customers: Customers can get lower prices for their applications (which is the main goal of virtualization) but retain an expected level of network QoS, while Operators can increase their network utilization for Cloud Applications (which means a lower CAPEX, and also a lower OPEX due to automation), and provide a differentiating offer, which translates in increased revenue.

As an example of an embodiment of the invention, a TV broadcaster is considered that has to transmit (inter)national-scale programs for a given period of time (e.g. Soccer World Cup, NFL Super Bowl, Olympic games, National election, or others). The workflow of the media cloud application is described along this defined period of time corresponding to transmission activities. The workflow is broken into several activities. Each of these activities of the cloud application requires to be served by accessing Telecom or Datacenter infrastructures as Services.

The Service Orders for these infrastructures as Services are allocated either to VPN services delivered from Telecom network infrastructures or to VM services delivered from Datacenter infrastructures.

When this media cloud application intends to transmit to specific locations, a Service Order is issued. The parameters of the Service Order for connectivity services are processed by the network service orchestrator function. The list of the parameters specific to connectivity services are used by the network orchestration function for selecting the most suitable available connectivity service according the implemented orchestration function.

A Service Order used as an entry for network orchestrator preferably includes one or a combination of the following parameters:

- Identifier: it identifies the Media Cloud Application that issued the Service Order;
- Order_date: the date and time at which the Cloud Application issued this Service Order to the network orchestrator;

- StateOfOrder: the state of the Service Order (see Fig. 3);
- Validity: indication of how long this Service Order is valid if not completed or otherwise closed or aborted. The time of the validity starts from the Order_date parameter;
- ServiceOrderId: this is the identifier of the connectivity service that was issued from this Service Order. If the corresponding connectivity service is not created, or this Service Order not associated to a connectivity service then this parameter value is null;
- Service Access Points: represents the Network Access points from the company customers of the service. Typically, it corresponds to the Customer Edge - Provider Edge (CE-PE) interface;
- Parties involved: companies/cloud application involved in the usage of the connectivity services;
- Start_time/start_date: represents time/date when the connectivity service ordered has to be available (denoted t);
- Service length: is how long the connectivity service has to be available to the cloud application before it is made unavailable (denoted duration);
- Traffic Estimates: expected volume and distribution of traffic for that service, relates to expected bandwidth consumption; and
- Other QoS parameters: according to the QoS parameters managed by the network infrastructure i.e. NMS, or NMS-independent QoS parameterization (from existing state of the art, with typical KPI/KQIs (Key Performance/Quality Indicators) being Availability (reflecting NE (Network Element) availability, link protection schemes, etc.), SessionSetup_Time, SessionTeardown_Time, Packet_Delay (i.e. average packet transmission delay), Packet Delay Variation (one or multiple "Jitter" KQIs, such as min-to-max packet delay variation), Packet Loss, and service-specific KQIs, such as MOS (Mean Opinion Score) estimators for audio or video), which is then mapped to NMS-specific formulation. When service-level KQIs are used to describe the Service Order requirements, a separate module (following state-of-the-art methods) is supposed to handle the translation into network-level requirements. For example, if a cloud-based video service issues a Service Order requiring a certain MOS for a certain traffic estimate, the separate module (with a MOS estimator formula based on network-level KPIs) can translate the service MOS and traffic requirements into network-level QoS indicators (Delay, Delay Variation, Loss, Bandwidth, overall Availability, etc.), which are then mapped to NMS-specific configuration commands (for the specific NEs in the network), and used by the network orchestrator for its task of scheduling VPNs and VMs.

The utilized network resources are charged by the Telecom network operator according to a cost model function of the number of routers involved and the performance capability (e.g. transmission rate) of each interface used. For this embodiment, the cost function is linear and expressed as: $Cost = \sum_{i=1}^{R} \alpha_i \left( \sum_{j=1}^{N} C_{ij} \frac{1}{j} \right)$ where $i$ is the index of the routers used for configuring the connectivity service, $R$ is the number of the routers involved for the connectivity service, $\alpha_i$ is the global cost of using the router $i$, $j$ is the index of the interface used at the router $i$ by the connectivity service, $N$ is the number interfaces of the router $i$ and finally $C_{ij}$ is the transmission rate used at the interface $j$ by the connectivity service. If the interface $j'$ of the router $i$ is not used by the connectivity service, then $C_{ij'} = 0$

As the performance (such as the response time, availability, etc.) of the connectivity service is essentially proportional to the amount of network resources used, the total cost of carrier-grade connectivity service is significantly reduced by using an appropriate orchestration algorithm. In this example, the strategy of the orchestration algorithm is to tune the amount of the network resources to be used by the connectivity services of the media cloud application such that the response time of the connectivity service is minimal and the costs of the network resource configurations are compliant with the media cloud application.

The FFCS algorithm allocates an arriving Service Order in one connectivity service available of the service inventory database. If there is more than one connectivity service available, the selection of the connectivity service to be allocated by the FFCS algorithm for the Service Order is done in Round-Robin manner.

In the case there is no connectivity service available to accommodate this Service Order; it is placed in a queue waiting for a connectivity service to become available. The Service Order waits for an available connectivity service until its Validity expires. If no connectivity service is released to become available within the Service Order Validity time parameter, then the Service Order is discarded by the network service orchestrator.

The LUCS algorithm allocates an arriving Service Order in one available connectivity service after looking for each connectivity service registered in the service inventory data-base. The algorithm selects an available connectivity service with latest time after which there is no Service Order allocated and considering that the Service Order is going to be allocated before its Validity expires. As before, if there is no connectivity service released before the Validity of the Service Order, it is discarded. LUCS algorithm reduces the duration of the vacant-times, then reducing the waste of connectivity service allocations, and maximizing the utilization of the network resources used for the configuration of each connectivity service.

The LUCS-VF algorithm improves LUCS algorithm by allowing allocating a Service Order in one of the vacant times of the connectivity services whenever it is possible. If more than one vacant time can fit the Service Order, the connectivity service having the vacant time starting the latest is allocated. The complexity of this algorithm is much more important than LUCS because it must keep updating in memory all the vacant-times of the connectivity services registered in the service inventory database (it is common that the number of vacancies in one connectivity service is several thousands). In order to make this algorithm implementable for a network service orchestrator, binary heap tree data structure is proposed to quickly find the most suitable vacant time (see Binary tree arbitration system and method, US Patent application 2003/0188065A1). With such an efficient data organization, the implementation of that algorithm variant for the network orchestrator may become feasible.

The SCSO algorithm orchestrates the allocation of the issued Service Order on the connectivity services of the service inventory differently. A Service Order is processed following its start_time parameter, and is not processed at its order_date parameter (unlike the previous algorithms). The Service Orders are sorted in an Arranger before being processed by the network service orchestrator. A Service Order is held in the Arranger so that it can be sequenced with other received Service Orders until (start_time - $\Delta$). The Arranger sorts the buffered Service Orders by classifying the start_time values of their connectivity services and then, when the time difference between the current time and the time of connectivity services to be activated (i.e. start_time) is equal to or less than $\Delta$, the Arranger releases those Service Orders to the network service orchestrator. After that, the network service orchestrator algorithm allocates an available connectivity service based on the start_time of the Service Order.

The dawn of the service connectivity $c$ is defined as the earliest time after which there are no more Service Orders allocated on the service connectivity service $c$. The dawn list $D$ is the list of the connectivity services of the service inventory database (CS-DB) sorted based on the values of their dawn times:

- $D(i)connectivity$ is the connectivity service $c$ listed at the $i$th position of $D$

- $D(i)dawn$ is the dawn time of the connectivity service listed at the $i$th position of $D$

Note that the list $D$ is sorted, such that:

$$i < j \Leftrightarrow D(i)dawn \leq D(j)dawn$$

Without loss of generality, between each pair of routers, there are $d$ connectivity services inventoried in CS-DB. The function Add(service_order) is the operation of adding a new Service Order service_order in the Arranger based on its start_time value. The function Release() releases the Service Order service_order if the time difference between the current time and the time of connectivity service to be activated (i.e. start_time) is equal to or less than $\Delta$.

The SCSO algorithm description can be summarized as follows between a given pair of routers $R$ and $R'$ having « $d$ » connectivity services registered in the CS-DB. The list of these $d$ connectivity services is denoted hereafter as D :

```
Initialize (current_time)
for (c = 0; c < d; c++)
    D(c).connectivity = c;
    D(c).dawn = current_time;
}
```

When a new Service Order service_order is issued from a media cloud application, it is added in the Arranger,

```
        Add(service_order);


        SCSO Orchestrator {
            While ((service_order = Release()) != NULL) {
                index_ConService =
Dawn_Selection(service_order);
                if (index_ConService == -1)
                    Discard service_order;
                else
                    DawnList_Update(index_ConService,
service_order);
                }
            }


        Dawn_Selection(service_order) {
            if (D(0).dawn > service_order.start_time)
                return -1;
            else
                c = d - 1;
            while ((D(c).dawn > service_order.start_time) and
(c ≥ 0))
                c = c - 1;
            return c;
            }


        DawnList_Update(found_ConService, service_order) {
            D(found_ConService).dawn =
service_order.arrival_time + service_order.length;
            cs_temp = D(found_ConService);
            e = found_ConService + 1;
            while ((e < d) and (cs_temp.dawn > D(e).dawn)) {
```

```
        D(e - 1) = D(e);

        e = e + 1;

      }

      D(e - 1) = cs_temp;   /* e = d ou (cs_temp.dawn
 <= D(e).dawn)     */

      return 1;

    }
```

The network service orchestration function according to the invention automates the activation and deactivation and allocation and deallocation of connectivity services for datacenter access. These algorithms are the first to be proposed for Carrier grade cloud services. The network service orchestrator with these engines (FFCS, LUCS, LUCS-VF, SCSO) provides an efficient trade-off between on-the-fly VPN/VM configuration and activation (very elastic but high latency - can be several minutes even when automated, which is not acceptable for interactive services - and large overhead) and statically reserved VPN/VM over-dimensioned for the worst case (rigid, low utilization, although low maintenance). Instead, the proposed solution relies on an appropriately dimensioned pool of statically pre-provisioned resources, which are dynamically allocated and activated on a timeslot basis, to a flow of incoming Service Orders, which characterize the connectivity needs of each particular cloud application.

The provision of network services (VLL, VPLS, VPRN, or other Internet Services) is orchestrated from Service Orders issued by for example Cloud Application workflows. It automates the network service provisioning with the provisioning of IT services (computing, storage, and software applications). The property of elasticity, beneficial for Operators as well as for Customers, is achieved without excessive provisioning and/or de-provisioning overhead. Using the invention, Cloud Applications can run with the guarantee that their virtualized environment meets certain levels of QoS, defined in their Service Orders. The proposed method would perfectly combine with an SLA management tool (especially one focused on clouds), which would monitor the actual level of performance offered by the VPN/VM services, and whether and how the Service Order requirements are met.

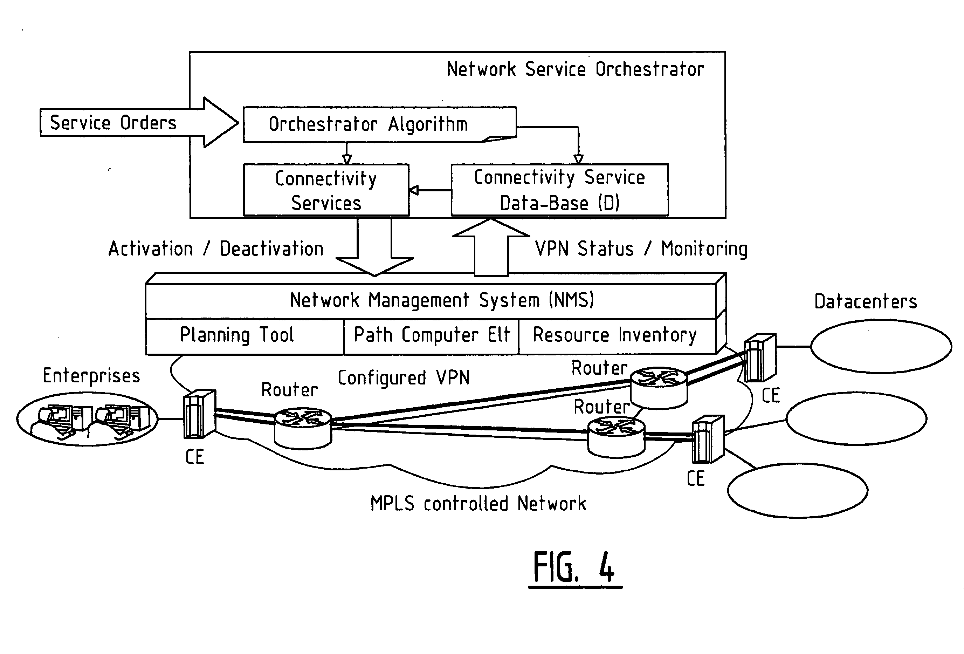

Figure 4 shows the network service orchestrator comprising an input for receiving service orders, a processor adapted for executing the orchestrator algorithm, the connectivity service database comprising information representing the connectivity services implemented in the network, whereby the orchestrator algorithm selects a set of connectivity services based on incoming service orders. These selected connectivity services are allocated/deallocated by sending a signal to the network management system operationally connected to the network service orchestrator. The network management system can amend the settings in the network nodes forming the network, either directly using the signal from the network service orchestrator, or indirectly by translating the signal to network node instructions, thereby implementing the allocation/deallocation order in the network.

Preferably, the network service orchestrator comprises update means for updating the connectivity service database based upon the signal sent to the network management system. Alternatively, the update means update the database based on information received from the network management system regarding VPN statuses in the network. Thereby, the network management system provides in a monitoring function to monitor the status of the network, based upon which the network service orchestrator can select connectivity services to be activated/deactivated.

A pre-configured connectivity service can be allocated or deallocated to an ordered service by using parameters relating to this service. For example the QoS parameter can be matched when the service is allocated and changed when the service is deallocated.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the FIGs., including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

**Claims**

1.  Network service orchestrator operationally connected to a network management system (NMS), the network service orchestrator comprising a virtual private network (VPN) tunnel configurations database (D) comprising information representing multiple VPN tunnel configurations configured on a network managed by the network management system (NMS), the network service orchestrator further comprising input means for receiving a service order, processing means configured to process an orchestrator algorithm to select a set of VPN tunnel configurations out of said multiple VPN tunnel configurations based on said service order, and a signal generator for generating and transmitting a signal to assign/deassign the selected set of VPN tunnel configurations in the network to the service order.

2.  Network service orchestrator according to claim 1, wherein the signal comprises instructions to the network management system (NMS) to assign/deassign the set of VPN tunnel configurations to the service order.

3.  Network service orchestrator according to claim 2, wherein the instructions to assign/deassign the set of VPN tunnel configurations comprises at least a Quality of Service parameter.

4.  Network service orchestrator according to any one of the previous claims, wherein the service order comprises at least an activation time interval and a service duration, and wherein the orchestrator algorithm is adapted for time-based scheduled selection of the set of VPN tunnel configurations.

5.  Network service orchestrator according to any one of the previous claims, further comprising updating means provided for updating the VPN tunnel configurations database based on the signal generated by the signal generator.

6.  Method for orchestrating VPN tunnel configurations in a network, comprising the steps of :

    - Receiving at least one service order;
    - Selecting a set of VPN tunnel configurations out of a database (D) comprising information representing VPN tunnel configurations configured on a network based on the at least one service order;
    - Generating a signal to assign/deassign the selected set of VPN tunnels configurations in the network to the service order; and
    - Transmit the generated signal to a network management system (NMS) managing the network.

7.  Method according to claim 6, wherein the service order comprises an activation time interval and a service duration, and whereby the step of selecting comprises time-based scheduled selection of said set.

8.  Method according to any one of the claims 6 and 7, comprising the further step of updating the database based on the generated signal.

**Patentansprüche**

1. Netzwerkdienst-Orchestrator, betriebsfähig an ein Netzwerkverwaltungssystem (NMS) gekoppelt, wobei der Netzwerkdienst-Orchestrator eine Datenbank (D) für die Tunnelkonfiguration eines virtuellen privaten Netzwerks (VPN) mit Informationen, welche mehrfache auf einem von dem Netzwerkverwaltungssystem (NMS) verwalteten Netzwerk konfigurierte VPN-Tunnelkonfigurationen darstellen, umfasst, wobei der Netzwerkdienst-Orchestrator weiterhin Eingangsmittel für den Empfang eines Dienstbefehls, Verarbeitungsmittel, welche für die Verarbeitung eines Orchestrator-Algorithmus zum Auswählen eines Satzes von VPN-Tunnelkonfigurationen aus den besagten mehrfachen VPN-Tunnelkonfigurationen auf der Basis des besagten Dienstbefehls konfiguriert sind, und einen Signalgenerator zum Erzeugen und Übertragen eines Signals für die Anweisungen zur Zuweisung/Aufhebung der Zuweisung des ausgewählten Satzes von VPN-Tunnelkonfigurationen in dem Netzwerk an den Dienstbefehl umfasst.

2. Netzwerkdienst-Orchestrator nach Anspruch 1, wobei das Signal Anweisungen für das Netzwerkverwaltungssystem (NMS) zur Zuweisung/Aufhebung der Zuweisung des Satzes von VPN-Tunnelkonfigurationen an den Dienstbefehl umfasst.

3. Netzwerkdienst-Orchestrator nach Anspruch 2, wobei die Anweisungen zur Zuweisung/Aufhebung der Zuweisung des Satzes von VPN-Tunnelkonfigurationen zumindest einen Dienstgüteparameter umfassen.

4. Netzwerkdienst-Orchestrator nach einem beliebigen der vorstehenden Ansprüche, wobei der Dienstbefehl mindestens ein Aktivierungszeitintervall und eine Dienstdauer umfasst, und wobei der Orchestrator-Algorithmus für die zeitlich geplante Auswahl des Satzes von VPN-Tunnelkonfigurationen geeignet ist.

5. Netzwerkdienst-Orchestrator nach einem beliebigen der vorstehenden Ansprüche, weiterhin umfassend Aktualisierungsmittel zum Aktualisieren der VPN-Tunnelkonfigurations-Datenbank auf der Basis des vom Signalgenerator erzeugten Signals.

6. Verfahren zum Orchestrieren von VPN-Tunnelkonfigurationen in einem Netzwerk, die folgenden Schritte umfassend:

   - Empfangen mindestens eines Dienstbefehls;
   - Auswählen eines Satzes von VPN-Tunnelkonfigurationen aus einer Datenbank (D), welcher Informationen, die auf einem Netzwerk auf der Basis des mindestens einen Dienstbefehls konfigurierten VPN-Tunnelkanfigurationen darstellen, umfasst;
   - Erzeugen eines Signals zum Zuweisen/Aufheben der Zuweisung des ausgewählten Satzes von VPN-Tunnelkonfigurationen in dem Netzwerk an den Dienstbefehl; und
   - Übertragen des erzeugten Signals an ein das Netzwerk verwaltendes Netzwerkverwaltungssystem (NMS).

7. Verfahren nach Anspruch 6, wobei der Dienstbefehl ein Aktivierungszeitintervall und eine Dienstdauer umfasst, und wobei der Schritt des Auswählens das zeitlich geplante Auswählen des besagten Satzes umfasst.

8. Verfahren nach einem beliebigen der Ansprüche 6 bis 7, umfassend den weiteren Schritt des Aktualisierens der Datenbank auf der Basis des erzeugten Signals.

**Revendications**

1. Orchestrateur de service de réseau connecté de manière fonctionnelle à un système de gestion de réseau (NMS), l'orchestrateur de service de réseau comprenant une base de données de configurations de tunnel (D) de réseau privé virtuel (VPN) comprenant des informations représentant des configurations de tunnel VPN multiples configurées sur un réseau géré par le système de gestion de réseau (NMS), l'orchestrateur de service de réseau comprenant en outre des moyens d'entrée pour recevoir un ordre de service, des moyens de traitement configurés pour traiter un algorithme d'orchestrateur afin de sélectionner un ensemble de configurations de tunnel VPN parmi lesdites configurations de tunnel VPN multiples sur la base dudit ordre de service, et un générateur de signal pour générer et transmettre un signal afin d'assigner/de désassigner l'ensemble sélectionné de configurations de tunnel VPN dans le réseau à/de l'ordre de service.

**2.** Orchestrateur de service de réseau selon la revendication 1, dans lequel le signal comprend des instructions destinées au système de gestion de réseau (NMS) pour assigner/désassigner l'ensemble de configurations de tunnel VPN à/de l'ordre de service.

**3.** Orchestrateur de service de réseau selon la revendication 2, dans lequel les instructions pour assigner/désassigner l'ensemble de configurations de tunnel VPN comprennent au moins un paramètre de qualité de service.

**4.** Orchestrateur de service de réseau selon l'une quelconque des revendications précédentes, dans lequel l'ordre de service comprend au moins un intervalle de temps d'activation et une durée de service, et dans lequel l'algorithme d'orchestrateur est adapté pour la sélection planifiée basée sur le temps de l'ensemble de configurations de tunnel VPN.

**5.** Orchestrateur de service de réseau selon l'une quelconque des revendications précédentes, comprenant en outre des moyens de mise à jour fournis pour mettre à jour la base de données de configurations de tunnel VPN sur la base du signal généré par le générateur de signal.

**6.** Procédé d'orchestration de configurations de tunnel VPN dans un réseau, comprenant les étapes suivantes :

- recevoir au moins un ordre de service ;
- sélectionner un ensemble de configurations de tunnel VPN parmi une base de données (D) comprenant des informations représentant des configurations de tunnel VPN configurées sur un réseau sur la base de l'au moins un ordre de service ;
- générer un signal pour assigner/désassigner l'ensemble sélectionné de configurations de tunnel VPN dans le réseau à/de l'ordre de service ; et
- transmettre le signal généré à un système de gestion de réseau (NMS) gérant le réseau.

**7.** Procédé selon la revendication 6, dans lequel l'ordre de service comprend un intervalle de temps d'activation et une durée de service, l'étape de sélection comprenant la sélection planifiée basée sur le temps dudit ensemble.

**8.** Procédé selon l'une quelconque des revendications 6 et 7, comprenant l'étape supplémentaire de mise à jour de la base de données sur la base du signal généré.

FIG. 1

FIG. 2

EP 2 667 541 B1

EP 2 667 541 B1

FIG. 3

Network Service Orchestrator

Service Orders → Orchestrator Algorithm

Connectivity Services ← Connectivity Service Data-Base (D)

Activation / Deactivation    VPN Status / Monitoring

Network Management System (NMS)

| Planning Tool | Path Computer Elt | Resource Inventory |

Enterprises    Configured VPN    Router    Datacenters

Router

Router

CE    CE    CE

MPLS controlled Network

<u>FIG. 4</u>

EP 2 667 541 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110171938 A
- US 200700118643 A
- US 20030188065 A1